(19) Europäisches Patentamt / European Patent Office / Office européen des brevets

(11) **EP 2 278 249 A1**

(12) **EUROPEAN PATENT APPLICATION**

(43) Date of publication:
26.01.2011 Bulletin 2011/04

(51) Int Cl.:
*F28D 20/00* (2006.01)  *F24J 2/42* (2006.01)

(21) Application number: 09166347.6

(22) Date of filing: 24.07.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: JB Group ApS
9700 Brønderslev (DK)

(72) Inventor: Bak, Jørgen
9700 Brønderslev (DK)

(74) Representative: Nielsen, Henrik Sten
Budde Schou A/S
Vester Søgade 10
1601 Copenhagen V (DK)

(54) **Heat storage system**

(57)    A heat storage system for storing solar heat, said system including:

i) a subterranean heat storage (2) for storing heat at temperatures above 800°C

ii) a collector structure (10) being placed on or above the ground, said collector structure (10) having at east one reflecting surface or converging lens for deflecting solar radiation,

iii) an absorber body (6) positioned so as to receive solar radiation deflected by said collector structure (10) and be heated by said solar radiation, and

iv) a solid material heat conductor (4) for transferring heat from said absorber body (6) to said subterranean heat storage (2).

Fig. 1

EP 2 278 249 A1

**Description**

In our time of increasing need for clean and safe power production, numerous attempts have been made to efficiently utilize the vast amounts of energy irradiated by the sun upon the earth surface. Solar panels for directly converting solar radiation to electric energy, although simple to operate in that they directly supply usable energy which may be stored in accumulators, have only had limited success for applications where large amounts of energy are needed due to their high cost and low efficiency. On the other hand solar power stations, where solar radiation is collected by large arrays of plane or curved mirrors and used to heat a working liquid for a turbine, demand vast areas for the placement of the mirror arrays, making these techniques unsuitable for all but the most unpopulated areas of the world.

For most homeowners or owners of small businesses wishing to lessen their environ-impart by harnessing solar energy, the simplest technique involves heating ordinary water by pumping the water through pipes assembled into panels. The panels absorb solar radiation and heat causing the water running through the pipes to heat up. Hot water may then be stored in an accumulator tank until it is used, primarily for residential heating or as a supply of hot water in for example a bath or shower.

Due to the low temperatures reached with this technique, the solar radiation can only be utilized in a very limited way. For example during the hotter seasons when the potential for harnessing the solar radiation is at its greatest, the demand for residential heating and hot water is at its lowest. Since the low temperature stored heat cannot be converted into electricity for running cooling fans or cooling devices, the proprietor of a solar heating equipment will still need electric energy from the conventional power grid to operate such cooling devices to attain a pleasant indoor temperature in his home or business.

Within the field of high temperature solar energy systems, the storing of solar heat is described in amongst others WO2008108870A1, US20080216822A1, US4362149A, US422365A, US4318939A and US20060179840A1.

The above-mentioned documents describe technologies for transporting heat from a solar collector to a heat storage, the heat transport being effected through a fluid or gas. The techniques are complicated, relying on substems to pump the fluid or gas, or otherwise utilize exotic substances such as molten salts or liquid metals, rendering them unsuitable for operation by non-professionals, e.g, a homeowner. Furthermore, the storing of heat at low temperatures requires large heat storages, and thus large amounts of insulation, for storing a sufficient amount of energy.

An object of the present invention is to provide a highly compact heat storage system for storing solar heat. The heat storage is highly efficient, minimizes the amount of insulation needed, and is capable of long term storage of solar heat. Heat is stored at temperatures above 800 ˚C to maximize the amount of energy that can be stored per volume of heat storage.

A further advantage according to the present invention is that heat at different temperatures for different applications may be withdrawn from the solar heat storage. It is therefore a further object of the present invention to provide a solar heat storage system where solar heat is stored in a plurality of heat storage bodies, the bodies being selectively interconnectable to transfer heat between the bodies to achieve different temperatures in the different heat storage bodies. The temperatures are suitable for both heating and utilization by thermodynamic machines for generation of electricity.

The above objects together with numerous other objects which will be evident from the below detailed description of preferred embodiments of the heat storage system of the present invention is according to a first aspect of the present invention obtained by a heat storage system for storing solar heat, said system including:

i) a subterranean heat storage for storing heat at temperatures above 800 ˚C,
ii) a collector structure being placed on or above the ground, said collector structure having at least one reflecting surface or converging lens for deflecting solar radiation,
iii) an absorber body positioned so as to receive solar radiation deflected by said collector structure and be heated by said solar radiation, and
iv) a solid material heat conductor for transferring heat from said absorber body to said subterranean heat storage.

The heat storage is preferably subterranean to preserve valuable ground surface and to facilitate the insulation of the heat storage, but it is contemplated that in certain applications an above ground placed heat storage may be advantageous.

Whether the heat storage is subterranean or not, it should be well insulated. Alternatives include a vacuum enclosure, optionally having a reflecting inner surface facing the heat storage for the highest storage temperatures, while conventional insulation such as rockwool or glass fibre may be used at lower temperatures. Further alternatives include calcium silicate, fused silica and other high temperature insulation materials.

Preferably the heat storage comprises a plurality of individual heat storage bodies, the bodies being selectively interconnectable by heat conduits so that heat may flow from one body into another. Thus heat can be retrieved at a number of different temperatures from the heat storage. The individual heat storage bodies may further be of different sizes and materials as a passive alternative to selectively interconnecting the bodies when different temperatures in the different heat storage bodies are desired. The individual heat storage bodies are preferably solid, but may also be in the form of hollows shells or chambers containing a heat storage fill mass, which simplifies the construction of the heat storage bodies.

Insulation may be provided for each individual storage body, or the storage bodies may be enclosed in an insulated space.

In one embodiment the heat storage bodies are arranged as concentric shells around a centre heat storage body.

To increase the heat dissipation through the storage bodies, high temperature fluids may circulate through channels provided in the storage bodies.

The material used for the storage bodies is preferably a high temperature resistant ceramic material or materials, but high temperature resistant metals may be utilised instead of, or in combination with, a high temperature resistant ceramic material. Suitable high temperature resistant materials include Hafnium carbide (HfC) with a melting temperature over 3890˚C, Tungsten (W) with a melting temperature of 3422˚C, thorium dioxide (ThO$_2$) with a melting temperature of 3390˚C. Titanium carbide (TiC) with a melting temperature of 3160˚C, Tungsten carbide (WC) with a melting temperature of 2870˚C, Magnesium oxide (MgO) with a melting temperature of 2852˚C, Zirconium dioxide (ZrO2) with a melting temperature of 2715˚C, Beryllium oxide (BeO) with a melting temperature of 2507˚C, Silicon carbide (SiC) having a melting temperature of 2730˚C, Alummium(III) oxide (Al$_2$O$_3$) with a melting temperature of 2072˚C, Silicon nitride (Si$_3$N$_4$) with a melting temperature of 1900˚C, Silica (SiO$_2$) with a melting temperature of 1650˚C, Iron (Fe) with a melting temperature of 1538˚C, etc.,

In use solar heat is stored in the heat storage at temperatures above 800 ˚C, preferably above 1000 ˚C, more preferably in the range of 1500-1800 ˚C or higher. However, one or several of the individual heat storage bodies may be held at lower temperatures, such as 500, 300, 125, 80 and 40 ˚C. For heat storage bodies which will be held at lower temperatures, any cheap commonly available material, such as stone or brick instead of the high temperature materials listed above, may be used if desired.

The heat conduits may be thermostat controlled so as to ensure that the different temperatures of the individual heat storage bodies are held constant.

The collector structure serves to deflect sunlight. Sunlight deflecting devices include plane mirrors, which are simple and cheap, curved mirrors which have better converging capabilities and converging lenses. The collector structure has at least one sunlight deflecting device such as a reflecting surface or converging lens, but preferably a plurality of sunlight deflecting devices are found in the collector structure. Each sunlight deflecting device may be individually movable to track the sun's position in the sky, or alternatively the whole collector structure may be movable for the purpose of tracking the sun. For installations supplying only heat, i.e. where electric energy for tracking the sun would have to be supplied either from the electric main grid or by subsystems, collector structure and the sunlight deflecting devices may be immovable but arranged in the form of an arc to continuously, although with lesser efficiency when compared to a sun tracking embodiment, deflect sunlight while the sun's position changes in the sky.

Systems for tracking the position of the sun in the sky are known and typically involve solar cells, light dependent resistors or thermal sensors for determining the position of the sun.

Other embodiments of collector structures include parabolic mirrors which may be preferable for smaller heat storage system installations or on locations where the sun's position is high in the sky.

It is further contemplated within the context of the present invention that when lenses are used, either as the only deflecting devices used, or alternatively in combination with mirror, even higher temperatures such as 5000 or 6000˚C may be reached.

The absorber body serves to receive solar radiation deflected by the collector structure and to become heated by said deflected solar radiation. To minimize heat loss from the absorber a spherical absorber body is preferred, although other shapes are possible. The absorber may furthermore be designed with an opening for receiving the deflected solar radiation while minimizing reflections of defected solar radiation. Another way of minimizing reflections is to have a porous absorber body. The absorber body may be solid or hollow, and may further comprise channels or conduits for passing a working fluid through the absorber body. The absorber is preferable constructed from high temperature resistant materials such as high temperature resistant ceramic material or materials, or metals having melting temperatures above 2000 ˚C, preferably above 3000 ˚C. Suitable high temperature resistant materials include Hafnium carbide (HfC) with a melting temperature over 3890˚C, Tungsten (W) with a smelting temperature of 3422˚C, thorium dioxide (ThO$_2$) with a melting temperature of 3390˚C, Titanium carbide (TiC) with a melting temperature of 3160˚C, Tungsten carbide (WC) with a melting temperature of 2870˚C, Magnesium oxide (MgO) with a melting temperature of 2852˚C, Zirconium dioxide (Zr02) with a mating temperature of 2715˚C, Beryllium oxide (BeO) with a melting temperature of 2507˚C, Silicon carbide (SiC) having a melting temperature of 2730˚C, Aluminium(III) oxide (Al$_2$O$_3$) with a melting temperature of 2072˚C etc. The absorber body is typically placed above ground and held by the heat conductor, but may also be placed close to the ground surface or in a hollow in the ground to decrease the required length of the heat conductor. The absorber body is typically not further insulated in regard of the heat loss from the absorber body to the surrounding air, but insulation in the form of a vacuum enclosure optionally having a reflecting inner surface may be suitable in high temperature applications where losses from heat radiated by the absorber body become significant. In order for the absorber body to receive the deflected light from the collector structure, the relative positions of the collector structure and the sunlight deflecting devices and the absorber body must be controlled. In a preferred embodiment the collector structure and the sunlight deflecting devices are movable to track the sun and deflect light towards the stationary absorber body. It is also possible to use a stationary collector structure and sunlight deflecting devices while the absorber body is movable. In a simple embodiment both collector structure and sunlight deflecting and absorber body are stationary. Moving both absorber body and collector structure and sunlight deflecting devices may be necessary in certain applications.

The heat conductor is typically of solid material and rod shaped, extending from the absorber body to the heat storage. Preferably the heat conductor is in the form of a ceramic encased metal rod to achieve a faster heat transfer as compared to an all ceramic heat conductor. The lower end of the heat conductor may be tiltably mounted on the heat storage to allow free positioning of the absorber, for example to move the absorber body in order to receive the maximum amount of deflected light on the absorber body. The heat conductor may also be of extendable construction to further adjust the position of the absorber body relative to the deflected light. It is further contemplated in certain embodiments of the present invention that the heat conductor may be movable or extendable to interrupt contact with the absorber body in order to decrease heat loss through the absorber when the absorber temperature is lower than the temperature in the heat storage, or alternatively to prevent overheating of the heat storage.

Heat may be retrieved directly from the heat storage in embodiments where the heat storage only comprises one heat storage body, but heat may also be retrieved from any heat storage body when the heat storage comprises a plurality of individual heat storage bodies. When the heat storage includes a plurality of heat storage bodies held at different temperatures, heat may be retrieved for a wide range of application such as domestic heating, the provision of hot water, heat for cooking, heat for an absorption cooling system or heat for a thermodynamic machine converting heat to kinetic energy driving an electric generator.

Preferably the heat storage includes a plurality of heat storage bodies so that heat may be retrieved from a different body than the one presently receiving heat from the absorber body through the conductor.

Although a solid heat conductor is preferred in terms of simplicity, the heat conductor may also comprise a system for pumping a heat transfer liquid through the absorber body.

In use, an automatic control system may be employed to control the heat storage system. Actions controlled by the automatic control system include the distribution of heat between the heat storage bodies to form a desired temperature profile. For efficient operation of the heat storage system, the control system should further operate the collector structure with its deflecting devices and or the absorber body so that maximum deflection of solar radiation towards the absorber body is achieved.

To prevent overheating of the absorber body or the heat storage, the control system should discontinue the heating of the absorber body, or alternatively sever the functional connection between the absorber body and the heat storage when thermal sensors monitoring the temperature of the heat storage indicates that maximum allowable temperature has been reached. Likewise, the control system may order the action of covering the absorber body with an insulating cover or the like to prevent heat from escaping the absorber body.

The heat storage system as described in the first aspect of the present invention may be constructed in sizes suitable for home use while larger systems may be utilized at farms or as power plants. Preferably the heat storage system comprises a heat storage having a plurality of heat storage bodies held at different temperatures to provide heat for both residential heating and the generation of electrical energy.

In a second aspect of the present invention a method of storing solar heat is provided, the method comprising the steps of:

    providing a subterranean heat storage,
    deflecting solar radiation with a collector structure having at least one reflecting surface or converging lens,
    absorbing the defected solar radiation with an absorber body to heat said absorber body,
    conducting heat from said absorber body to said heat storage with a solid material heat conductor, for storing said heat at temperatures above 800 ˚C,

The method according to the second aspect of the present invention may further include the step of withdrawing heat from the heat storage. Preferably, the method includes withdrawing heat from a heat storage body having a temperature below 1500 ˚C, such as 500, 300, 125, 80 or 40 ˚C for different applications. The lower temperatures are suitable for heating a house or providing hot water in a house while the higher temperatures are suitable for running thermodynamic machines such as steam engines or stirling motors for driving an electric generator generating electric energy. Retrieved heat may also be used to drive heating driven absorption cooling.

The invention and its many advantages will be described in more detail below with reference to the accompanying schematic drawings, which for the purpose of illustration show some non-limiting embodiments and in which

Fig. 1 shows an overview of a heat storage system for storing solar heat.

Fig. 2 shows a heat storage system for storing solar heat comprising multiple heat storage bodies.

Fig. 3 shows conversion of solar heat to electric energy.

Fig. 4 shows one embodiment of a residential heat storage system using a parabolic mirror.

Fig. 5 shows another embodiment of a heat storage system using a parabolic mirror.

Fig. 6 shows another embodiment of a heat storage system using a parabolic mirror.

Fig. 7 shows an embodiment of a temperature reducing heat storage system.

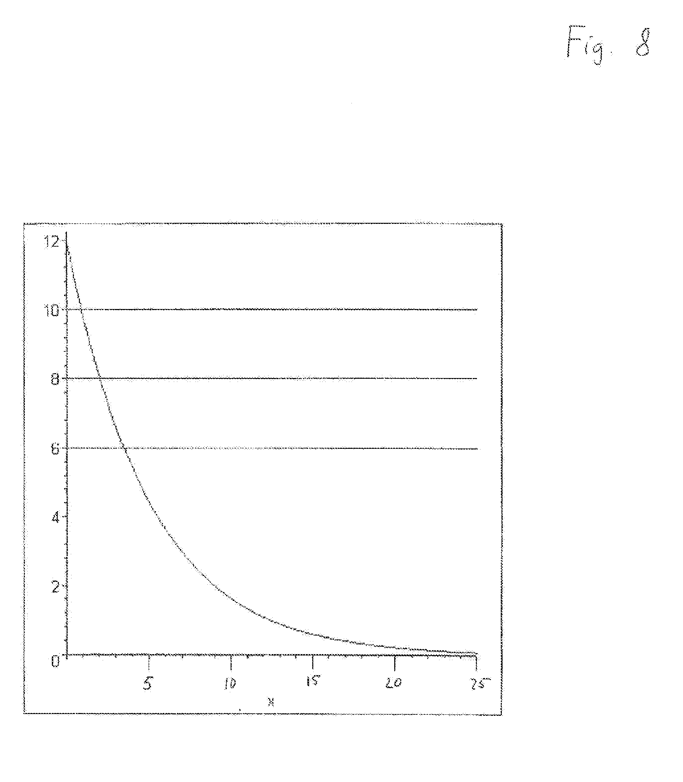

Fig. 8 shows the time dependent temperature difference between the heat storage and the absorber body.

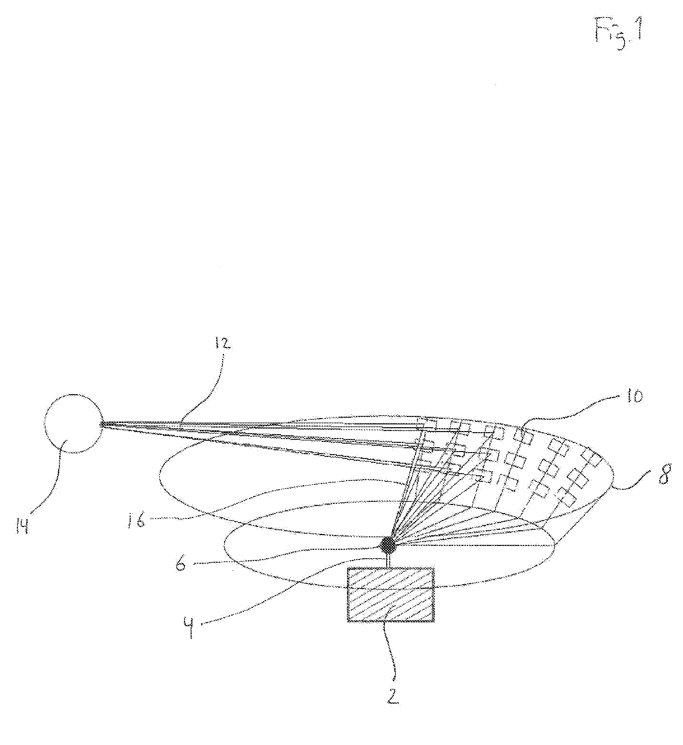

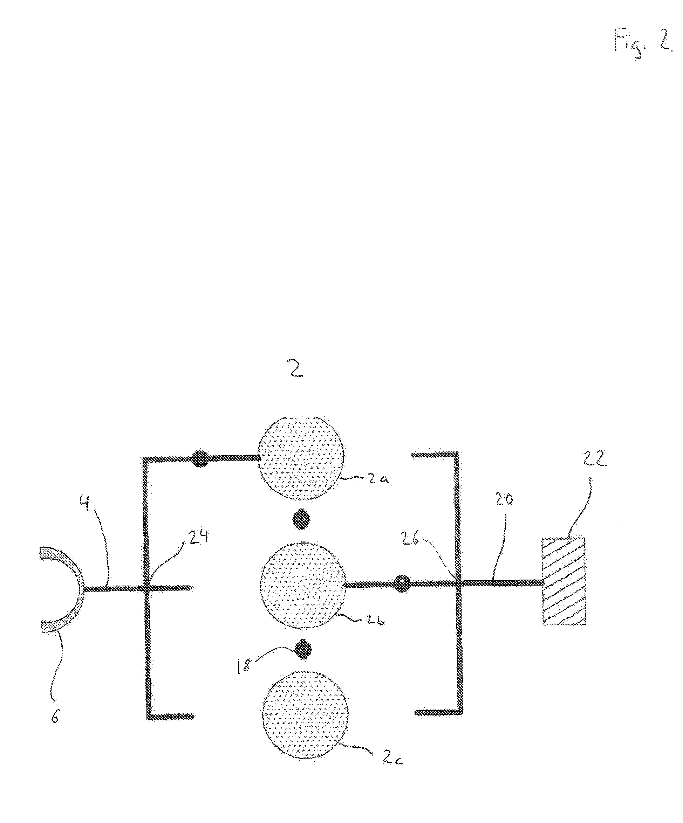

Fig. 1 shows an overview of a heat storage system according to the present invention. Heat is stored in the heat storage 2, which in fig. 1 is shown as having a subterranean placement. Heat storage 2 comprises a ceramic material able to withstand high temperatures. As will become evident in fig. 2, the heat storage may further comprise a plurality of heat storage bodies. Insulation (not shown) around heat storage 2 minimizes any heat leakage from heat storage 2 to the surrounding soil. Heat is transferred to heat storage 2 through a heat conductor 4 being rod shaped and comprising an outer ceramic shell and an interior highly heat conductive core. A suitable material for the interior heat conductive core is copper. The heat conducive core serves both to store heat and to transfer heat. The heat conductor 4 is connected to the absorber body 6 which is heated by deflected solar radiation. Absorber body 6 comprises a ceramic spherical body able to withstand temperatures of at least 2000 ˚C such as at least 3000 ˚C. The absorber is black in order to achieve the highest conversion of solar radration to heat. In the day time when the sun shines, solar radiation 12 from the sun 14 is deflected by a plurality of mirrors, one of which is designated the reference numeral 10 so that the deflected solar radiation 16 strikes the absorber body 6. Each mirror 10 is constructed from aluminium foil or other suitable reflective material, and is furthermore mounted to the collector structure 8 by a rotatable connection so that the mirror is automatically adjusted to track the sun's position in the sky during the day, so that the maximum amount of solar radiation 12 may be deflected towards the heat absorber 6. The collector structure 8 is shown in fig. 1 as forming a circle with the absorber at its centre. The location, and thereby variability of the sun's position in the sky where the heat storage system is installed decides the extent to which the circumference of the collector structure 8 is populated with mirrors 10. It is also contemplated that the mirrors 10 may be non-rotatably mounted to the collector structure provided that the complete circumference of the collector, structure 8 is populated with mirrors 10. The mirror area may be increased by increasing the radius of the collector structure.

Fig. 2 shows a heat storage system for storing solar heat comprising multiple heat storage bodies Heat from absorber body 6 is transferred to heat storage 2 through heat conductor 4. Heat storage 2 comprises first, second and third heat storage bodies designated 2a, 2b and 2c respectively. As shown in fig. 2, heat is being transferred to the first heat storage body 2a, while heat is simultaneously retrieved from heat storage body 2b through heat retrieval conductor 20 for use by heat consumer 22. Two heat conduits, one of which is designated the reference numeral 18 serve to transfer heat between heat storage bodies 2a-2c. As shown in fig. 2 the heat conduits 18 are not active, i.e. no heat is transferred between the heat storage bodies 2a-2c, however on the event that the heat demanded by the heat consumer 22 is too great in relation to the heat contained in heat storage body 2b, either one of the heat conduits 18 may be activated to transfer heat from heat storage body 2a or 2c to heat storage body 2b. The heat storage bodies 2a-2c may store heat at different temperatures to suit the demands of different heat consumers 22. The selective interconnection of heat storage bodies 2a-2c by heat conduits 18 may achieve such a plurality of temperatures in heat storage 2. Each heat storage body 2a-2c is individually insulated and may also together with the other heat storage bodies be placed in a further isolative enclosure. The heat storage 2 further comprises a storage branch 24 and a retrieval branch 26 facilitating storing and retrieving heat from any heat storage body 2a-2c.

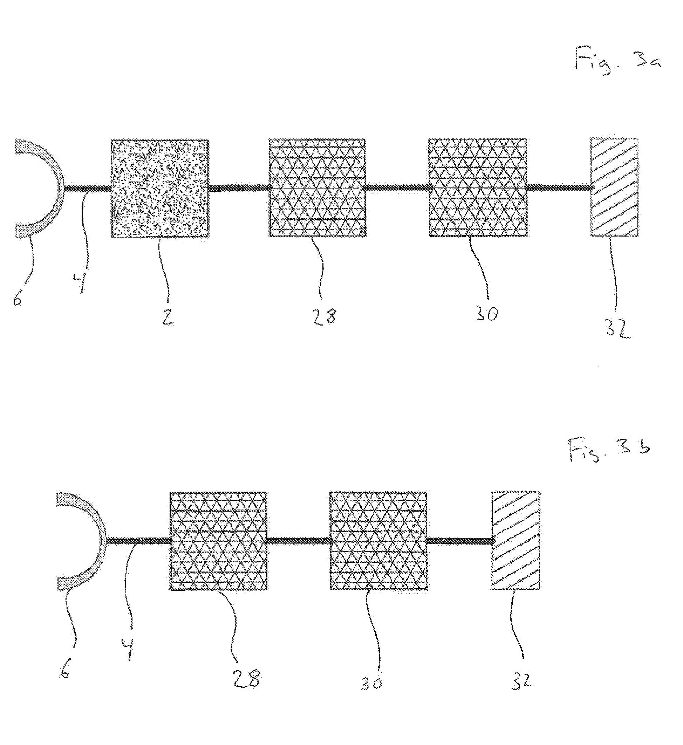

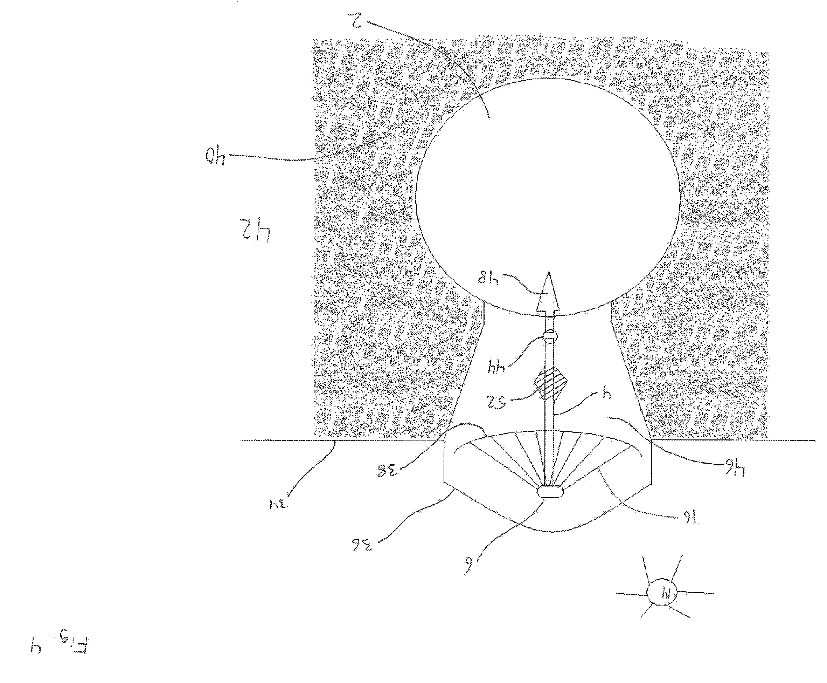

Fig 3.a and Fig. 3b show conversion of solar heat to electric energy, A thermodynamic machine 28 converts heat energy to kinetic energy for driving electric generator 30. Thermodynamic machine may typical be a steam engine or a stirling engine. Electric energy from electric generator 30 may then be used to power an electricity consumer 32, for example a refrigerator or air condition device. Fig. 3a shows heat being supplied to the thermodynamic machine 28 from the heat storage 2 while heat storage 2 is continuously replenished by heat transferred through heat conductor 4 from absorber body 6. In the event that heat storage 2 is at its maximum capacity, i.e. the maximum allowable temperature has been reached, heat can be supplied directly from absorber body 2 through heat conductor 4 to thermodynamic machine 28 as shown in fig. 3b. Fig. 4 shows one embodiment of a residential heat storage system using a parabolic mirror. Heat storage 2 is placed under the ground surface 34 in a hole excavated in the surrounding soil 42 and is kept at a temperature of 1500-1800 ˚C. Insulation 40 minimizes the leakage of heat energy from the heat storage 2. Attached to heat storage 2 through heat core 48 is heat conductor 4 which is equipped with a tilt joint 44 which allows tilting of the upper part of heat conductor 4. A ceramic body 52 is also attached to heat conductor 4 for storing heat. At the end of the heat conductor 4 opposite the heat storage 2 an absorber body 6 is attached. In fig. 4 The collector structure is in the shape of a circular parabolic mirror 38 carried by the heat conductor 4 so that heat conductor 4 extends out of the center of parabolic mirror 38 and thus positions the absorber body 6 in the focal point of the parabolic mirror 38. The sun's position in the sky is tracked by tilting the upper part of the heat conductor 4 to achieve maximum deflection of solar radiation towards the absorber body 6. Solar radiation from the sun 14 is deflected and concentrated by parabolic mirror 38 so that deflected solar radiation 16 strikes the absorber body 6.

Although not shown in fig. 4, heat conduits are connected to heat storage 2 for retrieving heat energy. A dome 36 protects the parabolic mirror 36 from the weather and prevents people and animals from falling into the heat storage system. The dome may also be used to sustain a vacuum in the enclosure 46 around the parabolic mirror 38 and heat conductor 4 to further reduce leakage of heat energy.

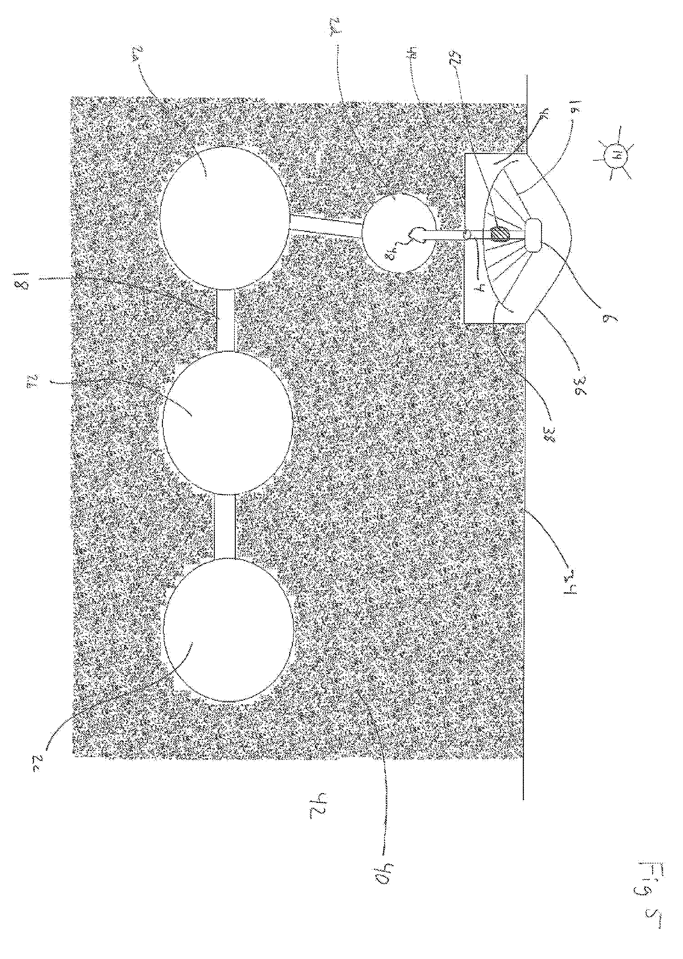

Fig. 5 shows another embodiment of a heat storage system using a parabolic mirror. The embodiment according to fig. 4 has in fig. 5 been modified by the inclusion of a plurality of heat storage bodies 2a-2c and auxiliary heat storage body 2d. Heat from absorber body 6 is transferred through tiltable heat conductor 4 to heat core 48 in auxiliary heat storage body 2d, wherefrom the heat is further transferred to heat storage bodies 2a-2c through heat conduits 18. All heat storage bodies 2a-2d are kept at a temperature of 1500-1800 ˚C.

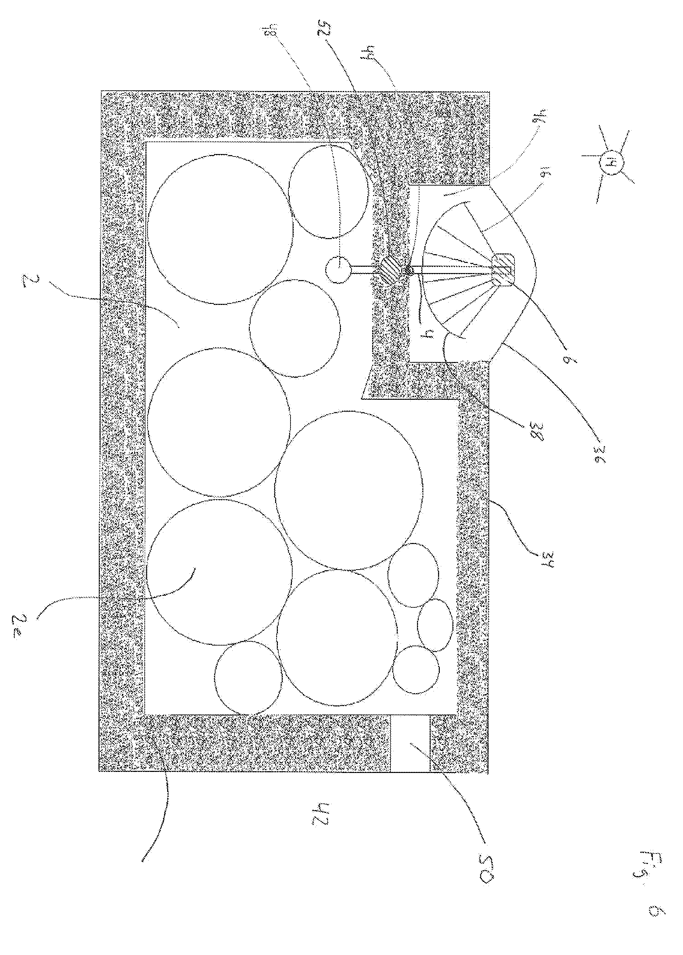

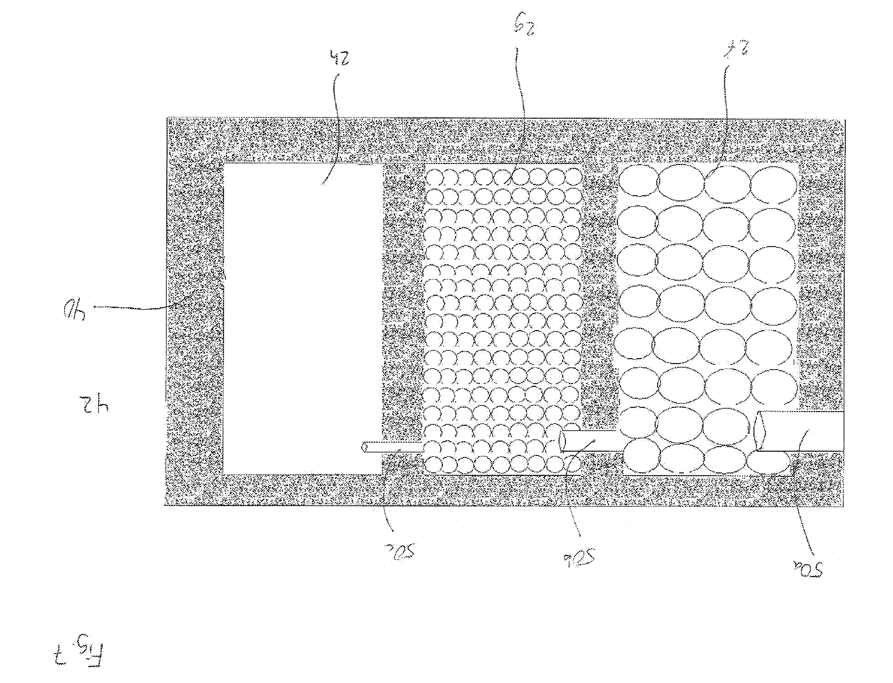

Fig. 6 shows another embodiment of a heat storage system using a parabolic mirror. The embodiment according to fig. 4 has in fig. 6 been modified by a heat storage 2 comprising an insulated chamber containing a fill mass of mixed heat bodies, one of which is designated the reference numeral 2e. The temperature in heat storage 2 is kept at 1500-1800 ˚C. Heat from absorber body 6 is transferred through a tiltable heat conductor 4 to a heat core 48. Heat from heat storage 2 is retrieved through the heat passageway 50 which connects heat storage 2 with further heat storages (shown in fig. 7.

Although the collector structure in figs. 4-6 is shown as a parabolic mirror 36 having a single smooth reflective surface, a parabolic shaped collector structure mounting a plurality of individual plane or curved mirrors may achieve the same solar radiation deflecting effect and is equally suitable.

Fig. 7 shows an embodiment of a temperature reducing heat storage system. Heat is transferred from a heat storage system, for example the heat storage system depicted in fig. 6, through a first heat passageway 50a to a medium temperature heat storage 2f. A second heat passageway 50b being smaller in dimension further transfers heat from the medium temperature heat storage 2f to a low temperature heat storage 2g. finally, a third heat passageway 50c transfers heat from the low temperature heat storage 2g to the liquid heat storage 2h, wherefrom hot liquid may be pumped for use in heating etc. All heat storages 2f-2h are enclosed in insulation 40, and placed in the soil 42 under the ground.

To further illustrate the variation in temperature of the heat storage, an example is given below:

In the example the heat storage system according to the present invention comprises an absorber body, a heat conductor and a heat storage. We assume that the temperature of the absorber body, $T_A$, is constant during the time it is irradiated with solar radiation. The temperature of the heat storage on the other hand will vary with time t and is given by $T(t)$. The heat conductivity of the heat conductor is given by $G$, and the flow of heat from the absorber body to the heat storage becomes $i_{ind} = G(T_A - T(t))$. The heat that flows into the heat storage causes the temperature of the heat storage to rise which gives us $c \cdot \dfrac{dT}{dt} = i_{ind} = G(T_A - T(t))$ where c is the heat capacity of the heat storage.

The differential equation for the temperature of the heat storage thus becomes $\dfrac{d(T_A - T(t))}{dt} = -\dfrac{G}{c}(T_A - T(t))$ with the solution $T_A - T(t) = T_A e^{-\frac{G}{c}t}$ and is plotted in graph in Fig. 6.

The number 12 corresponds to a heat storage temperature of 0, and during the first sunny day, the heat storage temperature rises to 2, and the difference $T_A - T(t)$ becomes 10. During the second day the heat storage temperature rises a further 2 and the difference $T_A - T(t)$ becomes 8. During the third day the heat storage temperature uses to 6. As the number of days approaches infinity the heat storage temperature approaches the temperature of the absorber body.

In this example, three days are selected during which the absorber body delivers heat to the heat storage, but other numbers of days may be selected. During the three days the temperature of the heat storage grows to half the temperature of the absorber body. Thus the half life time $t_{1/2}$ for the heat storage is three days.

$$t_{1/2} = \frac{c}{G}\ln 2 = 3\,days = 18h,$$ assuming the sun shines 6 hours each day.

Further assuming that the heat stored during three days should be enough for 10 days consumption of 0.1$MWh$ each day, the size of the heat storage may be calculated as

$$P = \int_0^{18} i_{loss}(t)dt = cT_A\left(1 - e^{-\frac{G}{c}t_{1/2}}\right) = \frac{1}{2}cT_A = 1\,MWh.$$ Further assuming that the temperature of the absorber body is 1000°$C$, the heat capacity $c$ and heat conductivity $G$ can be calculated from $c = \dfrac{2MWh}{1000°C} = \dfrac{2kWh}{°C}$ and

$$G = \frac{2\ln 2\frac{kWh}{°C}}{18h} = 77W/°C.$$ Assuming that the specific heat capacity $C$ of the heat storage material is $0.5J/_{g·C}$ gives the mass $M$ of the heat storage: $M = \dfrac{c}{C} = \dfrac{2\frac{kWh}{°C}}{0.5\frac{J}{g·C}} = 15\,ton.$ Further assuming that the density of the heat storage material is 5 $tons/m^3$ gives a volume of 3 m³ for the heat storage. If the heat storage is in the shape of a cube, it has s side of 1.44.

The heat conductivity $G$ is related to the specie heat conductivity $\lambda$, the length $l$, in this example $l=2m$, and the cross-sectional area $A$, in this example $A = 100cm^2$, of the heat conductor:

$$G = \lambda\frac{l}{A} = 77W/°C \cdot \frac{200cm}{100cm^2} = 1.50W/_{cm·C}.$$ A suitable heat conductor may thus be made from copper which has a specific heat conductivity of 3.85 $^W$/cm°C. In contrast, brick has specific heat conductivity of 0.001 $^W$/cm°C. The average effect that must should be delivered to the absorber body by the solar radiation becomes

$$P = \frac{1MWh}{18h} = 55kW.$$ Assuming that the intensity of the solar radiation during a winter day 0.5$^{kW}/_{m2}$ mirrors having

an area of $\dfrac{55kW}{0.5kW/_{m^2}} = 110m^2$ will be needed.

List of parts with reference to the figures

| | |
|---|---|
| 2. Heat storage | 26. Retrieval branch |
| 2a. First heat storage body | 28. Thermodynamic machine |
| 2b. Second heat storage body | 30. Electric generator |
| 2c. Third heat storage body | 32. Electricity consumer |
| 2d. Auxiliary heat storage body | 34. Ground surface |
| 2e. Heat storage body mass | 36. Dome |
| 2f. Medium temperature heat storage | 38. Parabolic mirror |
| 2g. Low temperature heat storage | 40. Insulation |
| 2h. Liquid heat storage | 42. Soil |
| 4. Heat conductor | 44. Tilt joint |
| 6. Absorber body | 46. Enclosure |
| 8. Collector structure | 48. Heat core |

(continued)

| 10. Mirror | 50. Heat passageway |
|---|---|
| 12. Solar radiation | 50a. First heat passageway |
| 14. The sun | 50b. Second heat passageway |
| 16. Deflected solar radiation | 50c. Third heat passageway |
| 18. Heat conduit | 52. Ceramic body |
| 20. Heat retrieval conductor | |
| 22. Heat consumer | |
| 24. Storage branch | |

**Claims**

1. A heat storage system for storing solar heat, said system including:

    i) a subterranean heat storage for storing heat at temperatures above 800 ˚C,
    ii) a collector structure being placed on or above the ground, said collector structure having at least one reflecting surface or converging lens for deflecting solar radiation,
    iii) an absorber body positioned so as to receive solar radiation deflected by said collector structure and be heated by said solar radiation, and
    iv) a solid material heat conductor for transferring heat from said absorber body to said subterranean heat storage.

2. The heat storage system according to claim 1, said subterranean heat storage including a plurality of heat storage bodies preferably made from high temperature resistant ceramic material or materials.

3. The heat storage system according to claim 2, said heat storage bodies being selectively interconnectable by heat conduits for transferring heat between said heat storage bodies.

4. The heat storage according to claim 2 or 3, said heat storage bodies being kept at different temperatures.

5. The heat storage system according to any of the preceding claims, said collector structure and/or said at least one reflecting surface or converging lens being movable dependent on the position of the sun so as to achieve deflection of solar radiation from the sun towards said absorber body.

6. The heat storage system according to any of the preceding claims, said collector structure being a parabolic mirror.

7. The heat storage system according to any of the preceding claims, said absorber body having a mating temperature of at least 2000˚C.

8. The heat storage system according to any of the preceding claims, said heat conductor having an elongated outer ceramic shelf encasing a metal rod.

9. A method of storing solar heat, said method comprising the steps:

    providing a subterranean heat storage,
    deflecting solar radiation with a collector structure having at least one reflecting surface or converging lens,
    absorbing the deflected solar radiation with an absorber body to heat said absorber body,
    conducting heat from said absorber body to said heat storage with a solid material heat conductor, for storing said heat at temperatures above 800 ˚C,

10. The method according to claim 9, said method further including withdrawing heat from said heat storage.

11. The method according to any of the claims 9-10, said heat being stored in a plurality of heat storage bodies preferably made from high temperature resistant ceramic material or materials.

12. The method according to claim 11, said heat storage bodies being selectively interconnectable by heat conduits for transferring heat between said heat storage bodies.

13. The method according to any of the claims 10-12, said heat being withdrawn from a heat storage body having a temperature below 1500 ˚C,

14. The method according to any of the claims 10-13, said heat being used for running heating driven absorption cooling.

15. The method according to any of the claims 10-13, said heat being used for running a thermodynamic machine for driving an electric generator to generate electric energy.

Fig.1

Fig. 2.

Fig. 3a

6  4  2  28  30  32

Fig. 3b

6  4  28  30  32

Fig. 4

Fig 5

Fig. 6

Fig. 7

Fig. 8

# EP 2 278 249 A1

| | | Europäisches Patentamt | | | | |
|---|---|---|---|---|---|---|

**EUROPEAN SEARCH REPORT**

Application Number

EP 09 16 6347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 4 362 149 A (THOMSON WALLACE B) 7 December 1982 (1982-12-07) * the whole document * ----- | 1-15 | INV. F28D20/00 F24J2/42 |
| Y | EP 0 987 510 A2 (ZEDER ALOIS [CH]) 22 March 2000 (2000-03-22) * the whole document * ----- | 1-15 | |
| Y,D | US 2006/179840 A1 (MURPHY TERRENCE H [US] ET AL) 17 August 2006 (2006-08-17) | 5-6 | |
| A | * the whole document * ----- | 1,9-10, 13,15 | |
| Y | US 5 994 681 A (LLOYD ROBERT [AU]) 30 November 1999 (1999-11-30) | 7 | |
| A | * column 16, line 57 - column 18, line 20; figures 1-3 * ----- | 1-6, 9-13,15 | |
| Y | DATABASE WPI Week 200819 Thomson Scientific, London, GB; AN 2008-C52329 XP002563774 -& CN 201 007 580 Y (HUANG Z) 16 January 2008 (2008-01-16) * abstract; figure * ----- | 8 | TECHNICAL FIELDS SEARCHED (IPC) F28D F24J |
| Y | US 4 437 321 A (ASAI SETSURO [JP]) 20 March 1984 (1984-03-20) * abstract; figures * ----- | 14 | |

The present search report has been drawn up for all claims

| Place of search | Date of completion of the search | Examiner |
|---|---|---|
| The Hague | 28 January 2010 | Van Dooren, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

18

**EP 2 278 249 A1**

## ANNEX TO THE EUROPEAN SEARCH REPORT
## ON EUROPEAN PATENT APPLICATION NO.

EP 09 16 6347

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2010

| Patent document cited in search report | | Publication date | Patent family member(s) | | Publication date |
|---|---|---|---|---|---|
| US 4362149 | A | 07-12-1982 | AU | 554061 B2 | 07-08-1986 |
| | | | AU | 7769681 A | 17-06-1982 |
| | | | ES | 8308996 A1 | 16-12-1983 |
| | | | MX | 154652 A | 12-11-1987 |
| EP 0987510 | A2 | 22-03-2000 | CH | 690079 A5 | 14-04-2000 |
| US 2006179840 | A1 | 17-08-2006 | US | 2004118449 A1 | 24-06-2004 |
| US 5994681 | A | 30-11-1999 | WO | 9525416 A1 | 21-09-1995 |
| | | | CA | 2185438 A1 | 21-09-1995 |
| | | | NZ | 282347 A | 28-01-1999 |
| CN 201007580 | Y | 16-01-2008 | NONE | | |
| US 4437321 | A | 20-03-1984 | DE | 3233649 A1 | 31-03-1983 |
| | | | JP | 58045468 A | 16-03-1983 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008108870 A1
- US 20080216822 A1
- US 4362149 A
- US 422365 A
- US 4318939 A
- US 20060179840 A1